# NEW EUROPEAN PATENT SPECIFICATION

(11) **EP 3 656 747 B2**
(45) Date of publication and mention of the opposition decision: **30.07.2025**
(45) Mention of the grant of the patent: 21.07.2021
(21) Application number: 18207972.3
(22) Date of filing: 23.11.2018
(51) Int. Cl.: C03C 1/00, C03C 11/00, C03C 14/00

(54) **PROCESS FOR PRODUCING FOAM GLASS**
VERFAHREN ZUR HERSTELLUNG VON SCHAUMGLAS
PROCÉDÉ DE PRODUCTION DE VERRE EXPANSÉ

(43) Date of publication of application: 27.05.2020
(73) Proprietor: Uusioaines Oy, 30101 Forssa (FI)
(72) Inventor: Jääskeläinen, Tuomas, 21530 Paimio (FI); Rautanen, Jarno, 30420 Forssa (FI)
(74) Representative: Boco IP Oy Ab

(56) References cited:
- EP-A1- 2 966 044
- EP-A2- 0 292 424
- WO-A1-2004/113245
- JP-A- 2005 132 714
- KÖNIG JAKOB ET AL: "Gas-releasing reactions in foam-glass formation using carbon and MnxOyas the foaming agents", CERAMICS INTERNATIONAL, ELSEVIER, AMSTERDAM, NL, vol. 43, no. 5, 29 December 2016 (2016-12-29), pages 4638 - 4646, XP029889748, ISSN: 0272-8842, DOI: 10.1016/J.CERAMINT.2016.12.133
- KÖNIG JAKOB ET AL: "Influence of the glass particle size on the foaming process and physical characteristics of foam glasses", JOURNAL OF NON-CRYSTALLINE SOLIDS, NORTH-HOLLAND PHYSICS PUBLISHING. AMSTERDAM, NL, vol. 447, 14 June 2016 (2016-06-14), pages 190 - 197, XP029669779, ISSN: 0022-3093, DOI: 10.1016/J.JNONCRYSOL.2016.05.021
- GARCIA-TEN J ET AL: "Glass foams from oxidation/reduction reactions using SiC, Si3N4 and AIN powders", GLASS TECHNOLOGY: EUROPEAN JOURNAL OF GLASS SCIENCE AND TECHNOLOGY PART A,, vol. 52, no. 4, 1 August 2011 (2011-08-01), pages 103 - 110, XP001575044, ISSN: 1753-3546
- BERNARDO, E. CEDRO, R. FLOREAN, M. HREGLICH, S.: "Reutilization and stabilization of wastes by the production of glass foams", CERAMICS INTERNATIONAL, ELSEVIER, AMSTERDAM., NL, vol. 33, no. 6, 25 June 2007 (2007-06-25), NL , pages 963 - 968, XP022127732, ISSN: 0272-8842
- "Interpretation of standard leaching test BS 12457-2 is your sample hazardous or inert'?" by authors M Zandi et al., published on October 5, 2007, Journal of Environmental Monitoring

## Description

### FIELD OF THE INVENTION

The present invention relates to a process for producing foam glass. More particularly, this invention relates to a process for producing foam glass for use as construction materials and in the manufacture of construction materials, particularly in earthworks and groundworks. The invention also relates to light weight construction materials based on foam glass with low leaching characteristics.

### BACKGROUND OF THE INVENTION

Foam glass, also known as foamed glass, is light-weight, non-combustible, heat-resistant, chemically stable, amorphous and porous material with small bulk weight, low thermal conductivity and high sound absorption. It is typically produced by sintering and foaming, at high temperatures, from a mixture of powdered starting glass or other glass-like materials with foaming agents, such as finely ground limestone, chalk, carbon black and coke. Foam glass having closed-cell structure typically exhibits desirable volume density, thermal insulation and mechanical properties. The closed pores in the foam glass makes products manufactured therefrom impermeable for liquids, including water, water vapors and gases. The use of foam glass as a construction material is well known. Foam glass has excellent heat and sound insulating characteristics and light weight.

Foam glass may be manufactured using various methods, from compositions based on various kinds of glass and foaming agents. Glass is typically used in the form of a glass powder, which may be obtained by grinding ordinary glass, from specially prepared glass melts or from cullet of pane glass, container glass, optical glass, and other glasses. The glass powder is mixed with gas forming agents, typically carbon or sulphur generating substances such as carbonates and/or sulfates. The mixture is then heated rapidly in a mold to foaming temperatures, in order for the glass powder to become viscous and fuse together forming a glass body. At the foaming temperature, decomposition of the foaming agents occurs.

Conventional methods for producing foam glass typically comprise melting glass having a special composition. The glass is usually grinded with a foaming agent for preparing a finely dispersed batch, foaming the formed batch in the course of annealing at a temperature of at least 700°C.

Patent US 4,198,224 describes a method for producing foamed glass from cullet, which method comprises heating a powdered batch to a foaming temperature, maintaining at this temperature to completion of the foaming process, and subsequent cooling. The foamed glass is produced from a finely dispersed glass powder and a foaming agent. Glass having a strictly definite composition and a foaming agent, both in a solid phase, are thoroughly ground in ball mills and intermixed. Grinding of the components is carried out separately in several steps: first, the glass and the foaming agent are ground separately, then they are ground together. The finely dispersed components of the feedstock mixture are intermixed in the solid phase. The resulting powdered mixture is then sintered in two steps and then cooled.

Patent RU 2187473 relates to a method of manufacturing expanded glass, comprising preliminary heat treatment at a temperature below the foaming temperature of a feedstock mixture prepared from a finely dispersed cullet powder and expanding additive, heating the mixture to the foaming temperature, maintaining at this temperature till the expansion process is completed, followed by cooling. In the method, the dispersed cullet is intermixed with the expanding mixture containing silica, a carbon-containing component, a metal sulfate and liquid sodium glass. Then the resulting mixture is first subjected to caking, then foamed at a temperature of 790 to 860°C, and thereafter tempering and annealing are carried out. The expanding additive is prepared by intermixing silica, sodium glass in dry or water-wetted state, carbon black, sulfate and boric acid. The obtained mixture is subjected to granulation in the presence of liquid glass for enhancing the agglomeration of the material into granules. For enhancing the granulation of the material, the mixture is wetted, if sodium glass is introduced as a dry powder. The granulated material is loaded into metallic molds and transferred into a furnace for caking, foaming and annealing.

In J. Garcia-Ten et al, European Journal of Glass Science and Technology Part A , 52(4) (2011), pages 103-110, the foam glass is prepared from a reaction mixture comprising silicon carbide as foaming agent and manganese dioxide as oxidizing agent.

The operating conditions of known methods are developed for only particular composition of cullet. The instability and complexity of the cullet composition, conditioned by the dependence on the functional purpose of the produced technical glass, the composition of the starting ingredients and on the glass melting schedule may lead to the instability of the properties of the foamed glass produced therefrom as well.

Patent EP 04793771 teaches a method for producing foam glass having a closed-pore texture with specific compressive strength and bulk density. Said foam glass is produced by first mixing an aqueous alkaline solution of sodium silicate and/or potassium silicate and powdered additives containing un-graded cullet and a carbonaceous foaming agent at a temperature not exceeding 70°C. Secondly, the mixture is then heat-treated at a temperature range between 450°C and 550°C until a dehydrated composition is obtained. Thirdly, the cooled composition is then reduced to a powder form by grinding the cooled composition. In the fourth step, the powder is loaded into molds that are treated with a special composition. The molds are then heated to a foaming temperature range between 750°C and 830°C and maintained at this temperature range until the foaming process of the powder is completed, followed by cooling.

The use of known technology makes it possible to produce foamed glass of sufficiently high quality with a homogeneous structure providing its operational stability, but such foamed glass has typically high leaching values of particularly arsenic, antimony and chromium, which make the product not suitable for use in earthworks and groundworks because of pollution problems. Additionally, the operation of producing foamed glass with conventional methods is often highly labor-intensive and costly.

Foam glass products presently on the market do not meet the requirements relating to leaching standards in several countries, for example the Netherlands' regulations relating to leaching standards: "Besluit Bodemkwaliteit (BBK) het Bouwstoffenbesluit (NL- BSB)", the BBK accreditation program AP04 and NEN 7383 NEN 7383:2004, leaching test for granular materials, and the Dutch Soil Directive, in accordance with the Dutch Soil Quality Regulation 'NV-Bouwstof'). Standard foam glass leaches arsenic, antimony and chromium in quantities above the limits contained in the Dutch Soil Directive ('NV-Bouwstof').

Despite the ongoing research and development in the processing of foamed glass, there is still a need to provide an improved process for providing foamed glass, for use as construction materials, particularly in earthwork and groundwork applications where leaching of contaminants and hazardous elements, such as arsenic, antimony and chromium should be avoided.

### SUMMARY OF THE INVENTION

The present invention provides a process for producing foam glass, whereby the foam glass thus produced achieves low leaching values, with particular reference to arsenic, antimony and chromium, and meeting the national leaching requirements. The foam glass is obtained as lightweight aggregates. Said aggregates are suitable for example as construction materials, particularly in earthwork and groundwork applications, even in groundwater areas. Said aggregates may be manufactured from recycled glass.

An object of the invention is to provide a process for producing foam glass with low leaching values.

One aspect is a process for producing foam glass according to claim 1.

During the heating the glass powder becomes viscous and fuses together forming a glass body, also called "cake". At the elevated temperature (foaming temperature), decomposition of the foaming agents occurs, and the glass body expands approximately from 2 to 5-fold by volume. During cooling the glass body is broken into pieces or aggregates having an average diameter typically in the range of about 0.1 - 150 mm, or even bigger.

Another aspect provides foam glass aggregates, obtainable by said process.

Characteristic features of the invention are presented in the appended claims.

### DEFINITIONS

Foam glass or foamed glass refers here to light-weight, non-combustible, heat-resistant, chemically stable, amorphous and porous material with closed-cell structure, where closed pores prevail, small bulk weight, low thermal conductivity and high sound absorption, obtained by sintering and foaming, at high temperatures from a mixture of powdered glass or other glass-like materials with foaming agent.

The term foam glass aggregate or granulate refers here to pieces of foam glass having an average diameter in the range of about 0.1 - 150 mm, preferably from 0.1 to 90 mm, more preferably 1-70 mm, particularly preferably 5-60 mm. The foam glass may, if desired, also be obtained in larger pieces having the average diameter significantly higher than 150 mm.

Colorless glass refers here to glass, which comprises less than 85 wt% of colored glass (green, brown or any other colored glass, including mirror glass), preferable not more than 90 wt% of colored glass. Colorless glass is typically referred to as flint glass, in the field.

Recycled glass refers here to glass material selected from waste glass, scrap glass, ordinary glass, specially prepared glass melts, flat glass or float cullet, container glass, packaging glass, soda lime glass, glass jars, glass containers, glass bottles, and any combinations thereof. Recycled glass does not refer here to heat resistant glass or fluorescent glass or CFL glass.

### DETAILED DESCRIPTION OF THE INVENTION

The present invention provides light and durable foam glass aggregates having high compressive strength, suitable as building and construction materials with excellent thermal insulating and sound proofing properties and low leaching values. Still more particularly, this invention relates to a method for producing said foam glass aggregates in a cost-effective manner utilizing recycled glass.

The present invention relates to a process for producing foam glass according to claim 1.

### Glass feedstock

The foam glass is produced from glass feedstock comprising glass powder.

Glass feedstock is typically used in the form of a glass powder. Glass feedstock may be obtained by milling glass material selected from waste glass, scrap glass, ordinary glass, specially prepared glass melts, flat glass or float cullet, container glass, packaging glass, soda lime glass, glass jars, glass containers, glass bottles, and any combinations thereof.

Suitably the glass feedstock comprising glass powder comprises recycled glass, preferably the feedstock consists of recycled glass. Said recycled glass may comprise not more than 20 wt% of automotive glass.

In an embodiment the glass powder may comprise not more than 20 wt% of automotive glass.

In an embodiment the glass powder may comprise not more than 20 wt% of automotive glass and not less than 80 wt% of flint glass.

The glass feedstock may comprise colorless glass. Colorless glass or flint glass may be used, comprising less than 85 wt% of colored glass (green, brown or any other colored glass or mirror glass), preferable not more than 90 wt% of colored glass.

The recycled glass does not refer here to heat resistant glass or light tube/bulb glass.

Typically, the glass feedstock is pretreated, for example by passing raw cullet on conveyor belts beneath magnets to remove ferrous metals and an eddy current to remove nonferrous metals. Organic materials are typically screened on a vibratory conveyor. X-ray color sorting machines are used to sort the cullet into brown, green and flint. Similar X-ray machines also remove CSP (ceramics, stones and porcelain) to purify the cullet further. The use of a computerized automatic sampling system may be used for providing consistent quality.

### Process

The glass material is typically crushed into a cullet. The glass cullet is then milled into a fine powder. The glass cullet is milled into a fine glass powder with an average particle size (D50 by laser diffraction method) between 15 µm and 150 µm, preferably between 15 µm and 90 µm, more preferably between 15 µm and 50 µm, even more preferably between 20 µm and 40 µm.

The glass material may be subjected to pretreating steps, such as removing metals, plastics, organic matter, and color separation, using methods known in the field.

The milling may be carried out using any suitable milling apparatus, such as ball mills.

The glass feedstock may also be produced from specially prepared materials, such as water glass, which has been melted at high temperatures and then subsequently ground into fine particles.

The glass feedstock is mixed with the foaming agent. The mixture is then transferred or conveyed on a wire or a conveyer, which may be coated with a glass fiber mat or felt. Said mat or felt may be impregnated or soaked with a clay suspension. The mixture is heated rapidly to foaming (expanding) temperatures, in order for the glass feedstock to become viscous and fuse together forming a melted glass body (also called as cake or mass). At the foaming temperature, decomposition of the foaming agents occurs liberating gas. After heating the mixture is cooled.

In an embodiment the glass feedstock may be mixed and milled with the foaming agent for preparing a finely dispersed batch, followed by foaming the formed batch in the course of annealing at the elevated temperature. Preferably the glass feedstock is milled separately.

It was found that a specific combination of Mn₃O₄ and silicon carbide (SiC) as the foaming agent provides an oxidizing reaction and a reducing reaction, whereby a final product is obtained, particularly exhibiting lower leaching of arsenic and antimony, and chromium than products produced by prior art methods.

In an embodiment, SiC having average particle size (D50 by laser diffraction method) of 0.1 -10 µm is used, preferably of 0.5 - 5 µm.

In an embodiment, Mn₃O₄ having average particle size (D50 by laser diffraction method) of 0.1 -10 µm is used, preferably of 0.5 - 5 µm.

The mixture comprises 0.2 -0.45 wt% of the carbide and 2.5 - 4.5 wt% of Mn₃O₄.

In an embodiment, the mixture comprises 0.3 -0.4 wt% of the carbide and 2.8 - 3.5 wt% of Mn₃O₄.

In the process the mixture is heated in at least three steps where the mixture is heated in a first heating stage to a temperature between 500 and 560°C, then in a second heating stage to a temperature between 600 and 720°C, then in a third heating stage to a temperature between 700 and 920°C, and then cooled to a temperature between 0 - 70°C to obtain foam glass in the form of aggregates.

The first heating stage may comprise one or more steps, preferably one step.

The second heating stage may comprise one or more steps, preferably one step.

The third heating stage may comprise one, two, three or more steps, preferably three steps.

The cooling may be carried out suitably 10 - 90 min

Any suitable apparatus used for the manufacture of foam glass may be used, such as tunnel ovens, plane ovens, rotatory kilns, extrusion apparatus, as continuous or batch process. Preferably a continuously operating plane oven or tunnel oven is used. Typically, the oven comprises several burners, the temperatures of which are adjusted according to predetermined sequence and values.

Typically, in a continuously operating process, the heating is carried out 20-50 m/hour, which refers to the speed of glass body in the oven.

The thickness of the infeed (glass feedstock and foaming agent) is suitably 10-30 mm, preferably between 15-25 mm.

In the process, glass feedstock comprising glass powder is mixed with gas forming foaming agent. The mixture is then heated rapidly. Typically, the mixture is then heated on a wire to foaming temperatures in order for the glass powder to become viscous and fuse together forming a glass body or cake. At the foaming temperature, decomposition of the foaming agents occurs, releasing gases into the viscous glass mixture. The released gases then expand the glass body, forming a coherent porous glass body that slowly expands in volume as more gases are released by the decomposition of the foaming agents.

In an embodiment, the particle size of the glass powder of between 15 µm and 150 µm, the speed of glass body of 20-55 m/h in the oven and the temperatures in the heating between 500 and 920°C (in the burners) are adjusted to obtain a suitable foaming level from 2 to 5 times of the original volume of the glass body, which in turn results in a suitable density of the product.

The foam glass aggregate, obtained with the process has volume density between 150 and 300 kg/m³ (dry loose density), preferably between 150 and 250kg/m³), more preferably between 175 and 250kg/m³, even more preferably between 180 and 230 kg/m³.

Foam glass is a recyclable product. Foam glass aggregate is a CE marked building product, the use of which does not require an environmental permit. However, the foam glass used in various countries must meet the requirements of national standards, for example in Finland must meet the standard SFS-EN 13055-2 for light-weight and non-bonded 2+ applications.

The CE marking of the product takes into account not only technical testing but also product characteristics, such as cleanliness, and effects on health and environment. CE conformity marking requires continuous quality monitoring and tracking measurements during the manufacture of the product.

The use of the foam glass aggregate of the invention in groundwater areas, for streets and roads as insulation and/or lightening material for structures, does not cause groundwater pollution.

The foam glass obtained by the process of the invention meets the limits of leaching of not more than 0.9 mg/kg arsenic, not more than 0.32 mg/kg antimony and not more than 0.63 mg/kg chromium.

In an embodiment, in the foam glass the leaching of arsenic was less than 0.3 mg/kg, of antimony was less than 0.3 mg/kg and of and chromium was less than 0.5 mg/kg.

In a preferable embodiment, in the foam glass the leaching of arsenic was less than 0.2 mg/kg, of antimony was less than 0.2 mg/kg and of and chromium was less than 0.3 mg/kg.

The foam glass aggregate of the invention is a lightweight odorless, inflammable aggregate with closed cell structure, excellent thermal insulation properties (typical dry thermal conductivity of 0.1 - 0.11 W/mK, with 20 % compaction), low density, high compressive strength (typically from 0.7 to 1.8 MPa) and high flexural strength (typical friction angle of 36 to 46°). It has the ability to form a free-draining layer.

It is very useful in earthworks and groundworks, for example as a lightweight bulk fill to minimize backpressure from reinstated soil and as a frost-heave barrier, and it has many good technical features for house construction. It is applicable in pipe-trenches, highways and in flood defences for providing lightness, thermal insulation and savings in civil engineering costs, without leaching hazardous elements, particularly arsenic, antimony or chromium to the soil. It can be used in the earthworks and groundworks, foundation build-ups, as an interior fill, in frost-proof courses, in flat roofs, in yard surfaces and as backfill and also in the manufacture of structures, such as blocks, boards, etc., with conventional binders and additives, useful in construction applications.

Particularly, the low-leaching foam glass of the invention increases applicable areas to include environmentally sensitive areas close to water courses and in contact with water tables.

### Examples

The present invention is described below with references to specific embodiments. It is, however, clear to those skilled in the art that the process(es) may be varied within the bounds of the claims.

### Example 1

### Production of foam glass

Clear (colorless) pre-crushed packaging glass (flint glass) was milled using a ball mill to an average particle size of about 25 µm, and density of about 217kg/m³. 0.36% - 0.39% of SiC and 3.10% - 3.30% of Mn₃O₄ were mixed to the milled glass to obtain a mixture, which was fed as a blanket to a tunnel oven (Riedhammer tunnel oven).

The temperatures and burners (RG1-RG12) used in said oven are presented in the table 1 below:

**Table 1.**

| | |
|---|---|
| RG1 | 530°C |
| RG2 | - |
| RG3 | 660°C |
| RG4 | - |
| RG5 | 780-800°C |
| RG6 | 780-800°C |
| RG7 | 850°C |
| RG8 | 850°C |
| RG9 | 850-900°C |
| RG10 | 850-900°C |
| RG11 | 850-900°C |
| RG12 | 850-900°C |

Infeed height was 18-21mm, speed was 25-46m/h. In a 25m tunnel oven, heating time was about 30-60min, depending on the heating program and the particle size of the glass powder. In a test run at 18 mm feed height, the total heating/foaming/cooling time was 33m/h, corresponding to about 46min. Cooling was about 10-20 min.

The particle size of the glass powder, the speed of glass in the oven and the temperature in the third heating stage (in the burners) are adjusted to obtain a suitable foaming level (average 2.8 times the initial volume), which in turn results in a suitable density of the product. A temperature of 880-900°C was used in the final four burner groups.

The final product is obtained as a result of foaming in the tunnel oven, where the glass and foaming agent are heated to liquid form. The foaming agent releases oxygen gas, whereby gas bubbles are formed in the glass body. At cooling the glass is first solidified to a continuous sheet, which is broken into small pieces of an average diameter about 10-60mm when cooling is continued.

The final product had density (dry loose density) of about 220kg/m³ +/- 15% and compressive strength of 0.89-1.13 Mpa.

The amounts of elements obtained in solubility test of the final product obtained in example 1 are presented in Table 2 below. It can be seen from table 2 that the product has very low leaching values of elements.

**Table 2.**

| **Foam glass** | mg/kg |
|---|---|
| Elements obtained in solubility test | |
| Arsen ic | 0.046 |
| Barium | 0.13 |
| Cadmium | <0.020 |
| Chromium | 0.21 |
| Copper | <0.020 |
| Mercury | <0.003 |
| Molybdenum | 0.032 |
| Nickel | <0.020 |
| Lead | <0.020 |
| Antimony | 0.052 |
| Selenium | 0.038 |
| Zinc | <0.020 |
| Vanadinum | 0.034 |
| Chloride | <23 |
| Fluoride | <4.6 |
| Sulphate | <43 |

| **Total concentration in the foam glass** | |
|---|---|
| Arsen i | <1.0 |
| Barium | 77 |
| Cadmium | <0.20 |
| Chromium | 5.9 |
| Copper | <5.0 |
| Mercury | <0.10 |
| Molybdenum | <2.0 |
| Nickel | 2.8 |
| Lead | 12 |
| Antimony | <0.50 |
| Selenium | <1.0 |
| Zinc | 5.2 |
| Vanadinum | <1.0 |

### Example 2

### Production of foam glass

The foam glass was manufactured in a similar manner as in example 1.

The properties of the foam glass were tested according to the Soil Quality Regulation (The Netherlands, requirements for NV-Bouwstof) and the limits and results for inorganic parameters are presented below in table 3.

**Table 3.**

| | Limit for NV-Bouwstof (mg/kg) (NL) | Result of foam glass of the invention (mg/kg) |
|---|---|---|
| Antimony | 0.32 | 0.109 |
| Arsen ic | 0.9 | < 0.2 |
| Barium | 22 | < 0.6 |
| Cadmium | 0.04 | < 0.007 |
| Chromium | 0.63 | 0.202 |
| Cobalt | 0.54 | < 0.07 |
| Copper | 0.9 | < 0.1 |
| Mercury | 0.02 | < 0.005 |
| Lead | 2.3 | < 0.3 |
| Molybdenum | 1 | < 0.05 |
| Nickel | 0.44 | < 0.2 |
| Selenium | 0.15 | 0.037 |
| Tin | 0.4 | < 0.02 |
| Vanadium | 1.8 | < 0.3 |
| Zink | 4.5 | < 0.7 |
| Bromide | 20 | < 0.8 |
| Chloride | 616 | < 100 |
| Fluoride | 55 | < 1 |
| Sulphate | 2430 | < 300 |

From table 3 it can be seen, that the foam glass obtained by the process of the invention meets all the requirements in the Netherlands.

## Claims

1. A process for producing foam glass, wherein said process comprises the steps, where glass feedstock comprising glass powder is mixed with 0.2 - 0.45 wt% of silicon carbide and 2.5 - 4.5 wt% of trimanganese tetroxide to obtain a mixture, calculated based on the total weight of the mixture, the mixture is heated in at least three steps where the mixture is heated in a first heating stage to a temperature between 500 and 560°C, then in a second heating stage to a temperature between 600 and 720°C, then in a third heating stage to a temperature between 700 and 920°C, and then cooled to a temperature between 0 - 70°C to obtain foam glass aggregates.

2. The process according to claim 1, **characterized in that** the glass feedstock comprising glass powder comprises recycled glass, preferably the feedstock consists of recycled glass.

3. The process according to claim 1 or 2, **characterized in that** the glass powder has an average particle size between 15 µm and 150 µm, preferably between 15 µm and 90 µm, more preferably between 15 µm and 50 µm.

4. The process according to any one of claims 1 - 3, **characterized in that** silicon carbide has an average particle size of 0.1 - 10 µm, preferably of 0.5 - 5 µm.

5. The process according to any one of claims 1 - 4, **characterized in that** trimanganese tetroxide having an average particle size of 0.1 - 10 µm is used, preferably of 0.5 - 5 µm.

6. The process according to any one of claims 1 - 5, **characterized in that** in a continuously operating process, the heating is carried out 20-50 m/hour.

7. Foam glass aggregate, **characterized in that** the foam glass is obtained by the process of any one of the claims 1 - 6 and leaching of arsenic is not more than 0.9 mg/kg, leaching of antimony is not more than 0.32 mg/kg and leaching of chromium is not more than 0.63 mg/kg, of said foam glass.

8. The foamed glass according to claim 7, **characterized in that** it has volume density between 150 and 300 kg/m³, preferably between 150 and 250kg/m³, more preferably between 175 and 250kg/m³.

9. The foamed glass according to claim 7 or 8, **characterized in that** the leaching of arsenic is less than 0.3 mg/kg, of antimony is less than 0.3 mg/kg and of chromium less than 0.5 mg/kg.

10. Use of the foamed glass of any one of claims 7 - 9, **characterized in that** the foam glass is used in earthworks and groundworks, in pipe-trenches, highways, in flood defences, foundation build-ups, as an interior fill, in frost-proof courses, in flat roofs, in yard surfaces, as backfill and in the manufacture of structures useful in construction applications.

## Patentansprüche

1. Verfahren zur Herstellung von Schaumglas, wobei das Verfahren die Schritte umfasst, in denen ein Glaspulver umfassendes Glaseinsatzmaterial mit 0,2 - 0,45 Gew.-% Siliciumcarbid und 2,5 - 4,5 Gew.-% Trimangantetroxid gemischt wird, um ein Gemisch zu erhalten, berechnet in Bezug auf das Gesamtgewicht des Gemischs, das Gemisch in mindestens drei Schritten erhitzt wird, wobei das Gemisch in einem ersten Erhitzungsschritt auf eine Temperatur zwischen 500 und 560 °C erhitzt wird, dann in einem zweiten Erhitzungsschritt auf eine Temperatur zwischen 600 und 720 °C erhitzt wird, dann in einem dritten Erhitzungsschritt auf eine Temperatur zwischen 700 und 920 °C erhitzt wird und dann auf eine Temperatur zwischen 0 und 70 °C abgekühlt wird, um Schaumglasgranulate zu erhalten.

2. Verfahren nach Anspruch 1, **dadurch gekennzeichnet, dass** das Glaspulver umfassende Glaseinsatzmaterial Recyclingglas umfasst, wobei das Einsatzmaterial vorzugsweise aus Recyclingglas besteht.

3. Verfahren nach Anspruch 1 oder 2, **dadurch gekennzeichnet, dass** das Glaspulver eine mittlere Teilchengröße zwischen 15 µm und 150 µm, bevorzugt zwischen 15 µm und 90 µm, bevorzugter zwischen 15 µm und 50 µm aufweist.

4. Verfahren nach einem der Ansprüche 1 bis 3, **dadurch gekennzeichnet, dass** Siliciumcarbid eine mittlere Teilchengröße von 0,1 - 10 µm, bevorzugt 0,5 - 5 µm, aufweist.

5. Verfahren nach einem der Ansprüche 1 bis 4, **dadurch gekennzeichnet, dass** Trimangantetroxid mit einer mittleren Teilchengröße von 0,1 - 10 µm, bevorzugt 0,5 - 5 µm, verwendet wird.

6. Verfahren nach einem der Ansprüche 1 bis 5, **dadurch gekennzeichnet, dass** in einem kontinuierlich arbeitenden Prozess die Erhitzung 20-50 m/Stunde ausgeführt wird.

7. Schaumglasgranulat, **dadurch gekennzeichnet, dass** das Schaumglas durch das Verfahren nach einem der Ansprüche 1 bis 6 erzeugt wird und die Auswaschung von Arsen nicht höher als 0,9 mg/kg, die Auswaschung von Antimon nicht höher als 0,32 mg/kg und die Auswaschung von Chrom nicht höher als 0,63 mg/kg des Schaumglases ist.

8. Geschäumtes Glas nach Anspruch 7, **dadurch gekennzeichnet, dass** es eine Raumdichte zwischen 150 und 300 kg/m³, bevorzugt zwischen 150 und 250 kg/m³, bevorzugter zwischen 175 und 250 kg/m³ aufweist.

9. Geschäumtes Glas nach Anspruch 7 oder 8, **dadurch gekennzeichnet, dass** die Auswaschung von Arsen kleiner als 0,3 mg/kg, von Antimon kleiner als 0,3 mg/kg und von Chrom kleiner als 0,5 mg/kg ist.

10. Verwendung des geschäumten Glases nach einem der Ansprüche 7 bis 9, **dadurch gekennzeichnet, dass** das Schaumglas im Erdbau und Grundbau, in Leitungsgräben, Autobahnen, in Hochwasserschutzanlagen, Fundamentaufbauten, als Innenfüllmaterial, in Frostschutzschichten, in Flachdächern, in Hofflächen, als Hinterfüllmaterial und bei der Herstellung von in Bauanwendungen nützlichen Strukturelementen verwendet wird.

## Revendications

1. Procédé de fabrication de verre mousse, dans lequel le procédé comprend les étapes dans lesquelles un matériau de base de verre comprenant une poudre de verre est mélangé avec 0,2 - 0,45 % en poids de carbure de silicium et 2,5 - 4,5 % en poids de tétroxyde de trimanganèse pour obtenir un mélange, calculé par rapport au poids total du mélange, le mélange est chauffé dans au moins trois étapes, ledit mélange étant chauffé à une température comprise entre 500 et 560 °C dans une première étape de chauffage, puis chauffé à une température comprise entre 600 et 720 °C dans une deuxième étape de chauffage, puis chauffé à une température comprise entre 700 et 920 °C dans une troisième étape de chauffage, et puis refroidi à une température comprise entre 0 et 70 °C pour obtenir des granulats de verre mousse.

2. Procédé selon la revendication 1, **caractérisé en ce que** le matériau de base de verre comprenant une poudre de verre comprend du verre recyclé, préférablement le matériau de base est constitué de verre recyclé.

3. Procédé selon la revendication 1 ou 2, **caractérisé en ce que** la poudre de verre présente une taille de particules moyenne comprise entre 15 µm et 150 µm, préférablement entre 15 µm et 90 µm, plus préférablement entre 15 µm et 50 µm.

4. Procédé selon l'une des revendications 1 à 3, **caractérisé en ce que** le carbure de silicium présente une taille de particules moyenne de 0,1 - 10 µm, préférablement de 0,5 - 5 µm.

5. Procédé selon l'une des revendications 1 à 4, **caractérisé en ce qu'**un tétroxyde de trimanganèse présentant une taille de particules moyenne de 0,1 - 10 µm, préférablement de 0,5 - 5 µm, est utilisé.

6. Procédé selon l'une des revendications 1 à 5, **caractérisé en ce que**, dans un processus de fonctionnement continu, le chauffage est réalisé à 20-50 m/heure.

7. Granulat de verre mousse, **caractérisé en ce que** le verre mousse est obtenu par le procédé selon l'une des revendications 1 à 6 et la lixiviation d'arsenic n'est pas supérieure à 0,9 mg/kg, la lixiviation d'antimoine n'est pas supérieure à 0,32 mg/kg, et la lixiviation de chrome n'est pas supérieure à 0,63 mg/kg, dudit verre mousse.

8. Verre mousse selon la revendication 7, **caractérisé en ce qu'**il présente une densité volumique comprise entre 150 et 300 kg/m³, préférablement entre 150 et 250 kg/m³, plus préférablement entre 175 et 250 kg/m³.

9. Verre mousse selon la revendication 7 ou 8, **caractérisé en ce que** la lixiviation d'arsenic est inférieure à 0,3 mg/kg, celle d'antimoine est inférieure à 0,3 mg/kg et celle de chrome est inférieure à 0,5 mg/kg.

10. Utilisation du verre mousse selon l'une des revendications 7 à 9, **caractérisée en ce que** le verre mousse est utilisé dans les travaux de terrassement et de sous-œuvre, les tranchées de canalisations, les autoroutes, dans les installations de protection contre les crues, les fondations, comme matériau de remplissage intérieur, dans les couches antigel, dans les toitures-terrasses, dans les surfaces de cour, comme matériau de remblayage et dans la construction de structures utiles dans les applications de construction.
